(19) **Europäisches Patentamt**

**European Patent Office**

**Office européen des brevets**

(11) Publication number : **0 434 000 B1**

(12) **EUROPEAN PATENT SPECIFICATION**

(45) Date of publication of patent specification :
09.08.95 Bulletin 95/32

(51) Int. Cl.⁶ : **G02F 1/137**

(21) Application number : **90124621.5**

(22) Date of filing : **18.12.90**

(54) **Liquid crystal display.**

(30) Priority : **21.12.89 JP 332338/89**

(43) Date of publication of application :
**26.06.91 Bulletin 91/26**

(45) Publication of the grant of the patent :
**09.08.95 Bulletin 95/32**

(84) Designated Contracting States :
**DE FR GB IT NL**

(56) References cited :
EP-A- 0 251 231
EP-A- 0 376 030
GB-A- 1 531 730
PATENT ABSTRACTS OF JAPAN, vol. 13, no.
129 (P-849) 30 March 1989 ; & JP-A-63 300 223

(73) Proprietor : **Stanley Electric Co., Ltd.**
**9-13, Nakameguro 2-chome**
**Meguro-ku Tokyo 153 (JP)**

(72) Inventor : **Clerc, Jean-Frederic**
**D-3, 681-12, Kogasaka**
**Machida-shi, Tokyo 194 (JP)**

(74) Representative : **Geyer, Ulrich F., Dr.**
**Dipl.-Phys. et al**
**WAGNER & GEYER,**
**Patentanwälte,**
**Gewürzmühlstrasse 5**
**D-80538 München (DE)**

## Description

BACKGROUND OF THE INVENTION

a) Field of the Invention

The present invention relates to a liquid crystal display, and particularly relates to a liquid crystal display using electrically controlled birefringence.

b) Description of the Related Art

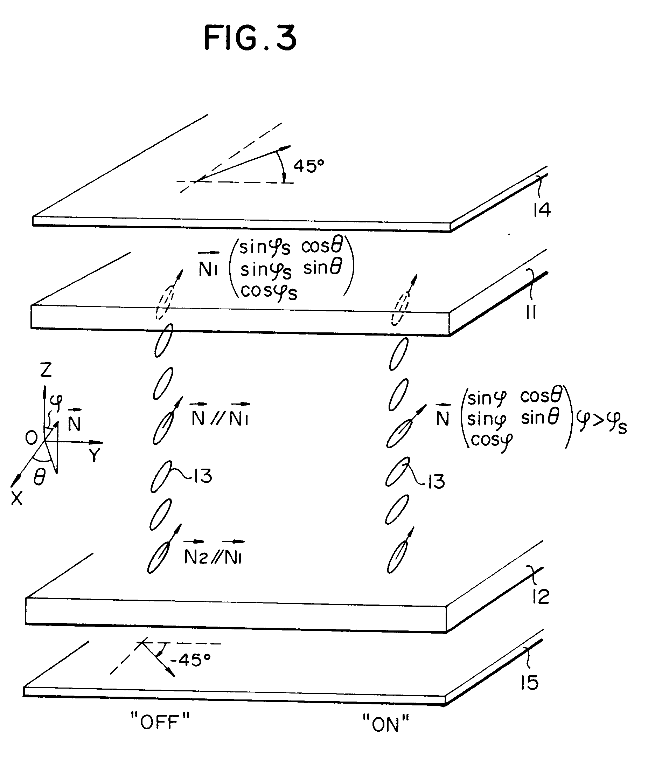

Fig. 3 shows a conventional liquid crystal display using so-called superhomeotropic (SH) technique in which birefringence is controlled electrically.

A liquid crystal cell is disposed between linear polarizers 14 and 15 having axes of polarization perpendicularly crossing each other. The liquid crystal cells constituted by a pair of substrates 11 and 12 disposed to define a predetermined gap therebetween and a liquid crystal layer disposed between the substrates 11 and 12. Each liquid crystal molecule 13 in the liquid crystal layer has a tilt angle $\phi$ which is an angle of inclination from the normal line to the surface of the respective substrate.

In Fig. 3, $\overrightarrow{N}$ represents the director vector of the liquid crystal molecule. In Fig. 3, the left part shows an "OFF" state and the right part shows an "ON" state.

The state of the molecule in the "ON" state and in the "OFF" state will be described hereunder.

The "OFF" state means a pseudo-homeotropic state. The surface tilt direction is represented by vectors $\overrightarrow{N_1}$ and $\overrightarrow{N_2}$. The vectors $\overrightarrow{N_1}$ and $\overrightarrow{N_2}$ are parallel to each other.

The two substrates have the same surface tilt angle $\phi_s$ which is defined as an angle of inclination from the normal to the substrate surface.

This fact ensures that liquid crystal molecules in the "OFF" state are oriented homogeneously.

In any position of the cell, the orientation $\overrightarrow{N}$ of the liquid crystal molecules is kept parallel to the vectors $\overrightarrow{N_1}$ and $\overrightarrow{N_2}$.

In the "ON" state, a tilt is induced by an electric field. Liquid crystal molecules at the central portion of the cell have a larger tilt angle $\phi$ than the tilt angle $\phi_S$ at the substrate surface portion.

All the liquid crystal molecules are oriented in a plane containing $\overrightarrow{N_1}$ and the Z axis.

To observe the liquid crystal cell having the "ON" state and the "OFF" state as described above, the liquid crystal cell is disposed between a pair of linear or circular polarizers having axes of polarization perpendicularly crossing each other.

In the "OFF" state, the cell has no effect on light propagating along the Z axis. Accordingly, whole incident light is absorbed by the two polarizers having polarization axes perpendicular to each other.

In the "ON" state, the cell exhibits birefringence. The maximum value of transmittance is obtained when the tilt direction of the liquid crystal cell is set at an angle of 45° from the linear polarizer.

Assuming now that the tilt angle is arranged in a Y-Z plane in the drawing, then the values of $\theta$, $\sin\theta$ and $\cos\theta$ are $\pi/2$, 1 and $\emptyset$, respectively. Accordingly, the following formulae can be obtained.

$$\overrightarrow{N_1} = \begin{bmatrix} 0 \\ \sin\phi_s \\ \cos\phi_s \end{bmatrix} \qquad \overrightarrow{N} = \begin{bmatrix} 0 \\ \sin\phi \\ \cos\phi \end{bmatrix} \qquad \phi > \phi_s$$

"PATENT ABSTRACTS OF JAPAN, vol. 13, no. 129 (P-849) 30 March 1989 (JP-A-63 300 223)" relates to a liquid crystal display. A smectic liquid crystal layer is used to set the difference in the pre-tilt angles of the liquid crystal molecules between two substrates. Transparent electrodes are disposed thereon and protective films and oriented films are formed thereon, the latter being subjected to a rubbing treatment in directions opposite from eachother so that the pre-tilt are matched with eachother. Thus, a liquid crystal display with good electrical and optical characteristics is obtained.

EP-A-0 376 030 discloses a PCEB display with antiparallel pre-tilt angles and constitutes prior art in the sense of , article 54(3) EPC.

## SUMMARY OF THE INVENTION

The present invention is directed to a liquid crystal display using the electrically controlled birefringence effect as it is defined in claim 1. Preferred embodiments of the invention are disclosed in the dependent claims.

An object of the present invention is to provide a liquid crystal display capable of exhibiting homogeneous displaying on the whole of the cell.

Another object of the present invention is to provide a liquid crystal display having a higher switching speed.

According to an aspect of the present invention, tilt angles of liquid crystal molecules in opposite directions and in different amounts on the surfaces of a pair of substrates.

The effect of electrically controlled birefringence is based on so-called Freedericksz transition between a pseudohomeotropic state and a tilt state.

A tilting treatment is applied to the surfaces of the substrates to improve the uniformity of tilt directions.

In the conventional technique, tilt directions on the two substrates are parallel to each other.

When the tilt directions on the two substrates are oriented in opposite directions, the electrooptical response of the liquid crystal molecules is sharpened. Accordingly, better contrast can be obtained. Further, the switching time can be shortened.

When the tilt directions are opposite, however, the direction of the liquid crystal molecules should be inverted, so that the liquid crystal molecules are twisted by an angle of $\pi$ in a plane parallel to the substrate. The $\pi$-twisted molecules may be widely distributed in the thickness of the cell or may be concentrated in a part of the thickness of the cell. These states are optically different. As a result, luminance in the "ON" state becomes inhomogeneous.

This problem can be solved by adding cholesteric dopant. However, the addition of cholesteric dopant brings about problems of excessive sharpening of sensitivity with respect to the gap between the substrates, excessive elongation of the response time, excessive increase of the luminance, etc.

The inventor has found that these problems can be solved by using asymmetric tilt angles.

The opposite-direction and asymmetric tilt angles can provide a similar homogeneous orientation of molecules as in the case of parallel tilt angles.

Though the twist angle of $\pi$ exists, the twisting of $\pi$ in the "ON" state is localized into a very thin layer in the vicinity of the substrate having a minimized tilt angle.

This state corresponds to the arrangement in which elastic energy is minimized, in the case where the liquid crystal molecules are pure nematic molecules or cholesteric molecules having a very large pitch (several or more times of the cell gap). When opposite-direction asymmetric surface tilt angles are employed, not only the advantage of the opposite-direction tilt can be obtained but the disadvantage thereof can be avoided without the use of cholesteric dopant.

However, the invention can be applied also to the case where cholesteric dopant is used. In this case, the cholesteric pitch is very large compared with the cell gap.

## BRIEF DESCRIPTION OF THE DRAWINGS

Fig. 1 is a perspective view of a liquid crystal display according to an embodiment of the present invention;

Figs. 2A and 2B are graphs showing the distribution of liquid crystal molecule directors in the liquid crystal display depicted in Fig. 1; and

Fig. 3 is a perspective view of a conventional liquid crystal display.

In the drawings, reference numerals represent the following parts:

1, 2··· substrate; 3··· liquid crystal molecule; 4, 5··· polarizer; 6, 7··· twist layer; 8, 9··· residual layer; 11, 12.. substrate; 13 ··· liquid crystal molecule; 14, 15.. polarizer; and $\vec{N}$ ··· liquid crystal molecule director.

## DESCRIPTION OF THE PREFERRED EMBODIMENTS

Embodiments of the present invention will be described with reference to the drawings.

The liquid crystal display using electrically controlled birefringence has opposite-direction asymmetric surface tilt. In the following, the surface tilt and the resultant orientation in bulk and optical behavior are described.

## Surface Tilt

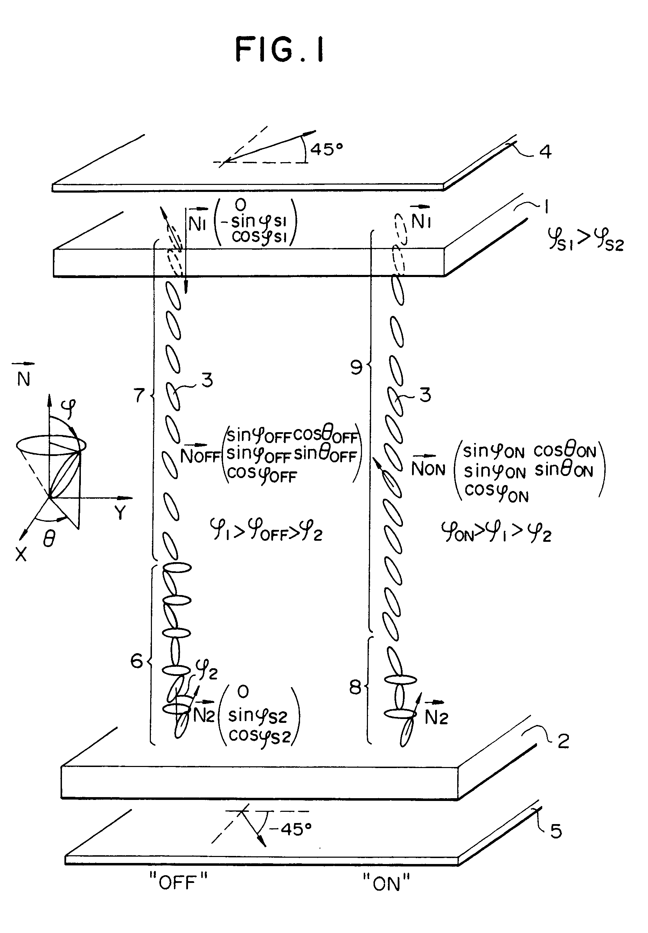

The liquid crystal display according to an embodiment of the present invention is schematically shown in Fig. 1, in which: X and Y axes are taken in the surfaces of the substrates; and a Z axis is taken perpendicularly to the substrates. The substrate 1 has a larger surface tilt angle and the substrate 2 has a smaller surface tilt angle. These tilt angles are disposed in opposite directions. Let $\phi_{S1}$ be the angle of molecule director $\overrightarrow{N_1}$ on the surface of the substrate 1 with respect to the normal to the substrate 1. Let $\phi_{S2}$ be an angle between liquid molecule director $\overrightarrow{N_2}$ on the substrate 2 and the normal. The foregoing relation can be expressed as follows.

$$\overrightarrow{N_1} = \begin{bmatrix} \sin\phi_{s1}\cos\theta \\ \sin\phi_{s1}\sin\theta \\ \cos\phi_{s1} \end{bmatrix}$$

$$\overrightarrow{N_2} = \begin{bmatrix} \sin\phi_{s2}\cos\theta \\ \sin\phi_{s2}\sin\theta \\ \cos\phi_{s2} \end{bmatrix}$$

in which $\phi_{S1}$ is larger than $\phi_{S2}$.

When the values of $\theta$ for $\overrightarrow{N_1}$ and $\overrightarrow{N_2}$ are respectively $-\pi/2$ and $\pi/2$, the following formulae are obtained.

$$\overrightarrow{N_1} = \begin{bmatrix} 0 \\ -\sin\phi_{s1} \\ \cos\phi_{s1} \end{bmatrix} \quad ; \quad \overrightarrow{N_2} = \begin{bmatrix} 0 \\ \sin\phi_{s2} \\ \cos\phi_{s2} \end{bmatrix}$$

Because the property of the substrate of orientating of liquid crystal molecules is strong, the tilt angles on the surfaces of the substrates never change regardless of the state (whether it is the "ON" state or the "OFF" state).

## Orientation in Bulk

In the "OFF" state, the liquid crystal molecules change the twist angle by $\pi$ while the director changes from $\overrightarrow{N_1}$ on the surface of the substrate 1 to $\overrightarrow{N_2}$ on the surface of the substrate 2. Accordingly, the liquid crystal molecule director in bulk is represented by the formula:

$$\overrightarrow{N_{OFF}} = \begin{bmatrix} \sin\phi_{OFF}\cos\theta_{OFF} \\ \sin\phi_{OFF}\sin\theta_{OFF} \\ \cos\phi_{OFF} \end{bmatrix}$$

in which
$$\phi_{S1} > \phi_{OFF} > \phi_{S2}$$
and
$$-\pi/2 < \theta_{OFF} < \pi/2.$$

Angles $\phi_{OFF}$ and $\theta_{OFF}$ are functions of coordinate Z. As shown in Fig. 1, $\phi_{OFF}(Z)$ changes relatively homogeneously. The twist angle $\theta_{OFF}(Z)$ changes mainly at a portion 6 near the surface of the substrate 2 having a smaller surface tilt angle.

In the "ON" state, the liquid crystal molecules also exhibit the change of the twist angle by $\pi$. The tilt angle

increases according to the effect of an electric field applied thereto. Because the effect of orientating of liquid crystal molecules on the surfaces of the substrates is strong, the directors $\vec{N_1}$ and $\vec{N_2}$ on the surfaces of the substrates never change regardless of the state (whether it is the "ON" state or "OFF" state).

The liquid crystal molecule director in bulk is represented by the formula:

$$\vec{N_{ON}} = \begin{bmatrix} \sin\phi_{ON}\cos\theta_{ON} \\ \sin\phi_{ON}\sin\theta_{ON} \\ \cos\phi_{ON} \end{bmatrix}$$

in which
$$\phi_{ON} > \phi_{S1} > \phi_{S2}$$
and
$$-\pi/2 < \theta_{ON} < \pi/2.$$

As shown in Fig. 1, the tilt angle $\phi_{ON}(Z)$ increases from $\phi_{S1}$ on the substrate 1 to $\phi_{ON}$ in bulk and then decreases from $\phi_{ON}$ in bulk to $\phi_{S2}$ on the substrate 2.

All the twist angle changes are locally distributed into a very thin layer 8 in the vicinity of the substrate 2 having a smaller surface tilt angle. As the value of the tilt angle $\phi_{ON}$ in bulk increases, the thickness of the layer in which the twist angle changes are locally distributed decreases. The changes in the twist angle locally distributed into a very thin layer in the z-direction region having the smaller tilt angle has little optical effect.

The effective birefringence is very low and is represented by the following formula.

$$(\Delta N) = (\Delta)LC \times \sin^2\phi_{S2}$$

The characteristic or eigen mode of propagation with respect to the twisting of angle $\pi$ is no longer linear but elliptic. Experiment proved that the thin layer having the twisting of $\pi$ has no optical effect. Accordingly, the cell having opposite-direction asymmetric tilt angles provides the similar optical property as that of the standard SH cell having parallel symmetric tilt angles.

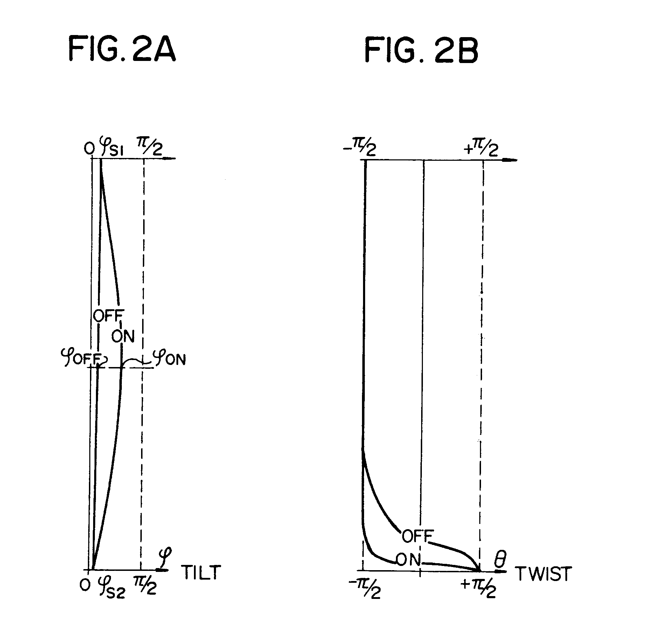

Figs. 2A and 2B are graphs showing the distribution of liquid crystal molecule directors in the liquid crystal cell by plotting tilt and twist angles, respectively.

Fig. 2A is a graph showing the distribution of tilt angles in the direction of the thickness of the cell.

Fig. 2B is a graph showing the distribution of twist angles in the direction of the thickness of the cell.

## Optical Behavior

In the "OFF" state, the tilt angle changes gradually from $\phi_{S2}$ to $\phi_{S1}$. Accordingly, the range in which the tilt angle is distributed is very narrow. The liquid crystal cell is observed between a pair of crossed polarizers. Though a rigorous mathematical expression of transmitted light intensity cannot be obtained due to the twist angle of , the following expression overestimating the relative transmittance can be obtained.

$$I < C_P\sin^2[(\pi\,\ell \times \Delta n \times \sin^2\phi_{S1})/\lambda]$$

In this expression, $\Delta n$ represents birefringence of the liquid crystal cell, $\phi_{S1}$ represents a large surface tilt angle, $\ell$ represents gap length of the cell, $\lambda$ represents wave length, and $C_P$ represents a constant dependent on the polarizer. The constant $C_P$ is not larger than $\emptyset.5$. In the case of $\phi_{S1}>1°$, $\ell = 5\,\mu m$, $\lambda = \emptyset.5\,\mu m$ and $\Delta n = \emptyset.2$, the transmitted light intensity is smaller than 1%.

Accordingly, the "OFF" state appears black.

In the "ON" state, the very thin twist layer is localized in the vicinity of the substrate 2, so that the layer has no optical effect on transmission light. If the local twist layer is neglected, the transmitted light intensity can be expressed as follows, by use of the expression of the normal electrically controlled birefringence type liquid crystal cell.

$$I_{on} \fallingdotseq C_P\sin^2[(\pi\,\ell\,\overline{\Delta n\,\sin^2\phi_{on}})/\lambda]$$

(In this expression, the overline represents the average value.)
In the case of $(\pi\,\ell\,\overline{\Delta n\,\sin^2\phi_{on}})/\lambda = n/2$, the following expression can be obtained.

$$I_{on} \fallingdotseq C_P$$

Accordingly, the "ON" state appears white.

In the following, the treatment of the substrates for giving surface tilt angles is described.

In general, the tilt angles $\phi$ on the surfaces of the substrates 1 and 2 are set as follows. The tilt angle $\phi_1$ is within a range of about 1° to about 5°. The tilt angle $\phi_2$ is within a range of about $\emptyset°$ to about $\emptyset.5°$. The aforementioned surface tilt is provided by the following method.

First Step: Preparation of Underlie Layer

An underlie layer is made of a polymer material (e.g. polyimide) or a minerals (e.g. $SiO_2$).
Anisotropic treatment is applied to the underlie layer. That is, rubbing or oblique evaporation is done on the substrate.

Second Step: Homeotropic Orientation

A predetermined material such as poly-silane is adsorbed on the anisotropic underlie layer prepared as described above. It is known that the adsorption of poly-silane provides surface tilt from 0° to 30°.
A conventional standard SH cell and a cell according to the aforementioned embodiment of the invention were prepared with the cell gap of 5 μm. The performances of these cells were compared.

<div align="center">TABLE</div>

|  | Conventional standard cell | Cell according to the invention |
|---|---|---|
| Contrast (driving with 1/125 duty factor) | 30 | 40 |
| tr | ca.100ms or less | ca.80ms or less |
| td | ca.100ms or less | ca.80ms or less |

In the table, tr represents rise time in the case where the transmittance rises from 0% to 90% upon application of "ON" waveform, and td represents decay time in the case where the transmittance decays from 100% to 10% upon application of "OFF" waveform.
It is apparent from the table that the response speed was improved according to the embodiment of the invention.
According to the aforementioned embodiment, there can be provided a liquid crystal display using antiparallel and asymmetric tilt angles and thereby exhibiting sharp response, good contrast and homogeneous response on the whole surface of the cell.

## Claims

1. A liquid crystal display using the electrically controlled birefringence effect and comprising:
   a pair of substrates (1, 2) arranged to be opposite to each other with separation of a predetermined gap and a liquid crystal layer (6-9) sandwiched between said pair of substrates (1, 2), the opposite surfaces of said pair of substrates (1, 2) being preliminarily subjected to a surface treatment so as to give adjacent liquid crystal molecules (3) predetermined tilt angles in with respect to a normal to the cell; characterised in that the tilt angle at one of the surfaces is different in sign and magnitude from the tilt angle at the opposite surface.

2. A liquid crystal display according to Claim 1, in which said liquid crystal layer is formed of a nematic liquid crystal layer or a cholesteric liquid crystal layer having a pitch larger than said gap.

3. A liquid crystal display according to Claim 1 or 2, further comprising a pair of polarizers (4, 5) disposed outside of said pair of substrates (1, 2), said pair of polarizers (4, 5) being linear polarizers having polarization axes perpendicularly crossing each other and making an angle of 45° with respect to a plane containing the tilt angles, or being circular polarizers having opposite circulating directions.

## Patentansprüche

1. Flüssigkristallanzeige, die den elektrisch gesteuerten Doppelbrechungseffekt verwendet, die folgendes aufweist:

ein Paar von Substraten (1, 2), und zwar angeordnet einander gegenüber zu sein, mit einer Trennung durch eine vorbestimmte Lücke und einer Flüssigkristallschicht (6-9), die sandwichartig zwichen dem Paar von Substraten (1, 2) angeordnet ist, wobei die gegenüberliegenden Oberflächen des Paars von Substraten (1, 2) zunächst einer Oberflächenbehandlung unterworfen wurden, um benachbarten Flüssigkristallmolekülen (3) vorbestimmte Kippwinkel bezüglich der Normalen der Zelle zu geben, dadurch **gekennzeichnet,** daß der Kippwinkel an einer der Oberflächen verschieden von dem Kippwinkel an der gegenüberliegenden Oberfläche ist, und zwar in Vorzeichen und Größe.

2. Flüssigkristallanzeige nach Anspruch 1, bei der die Flüssigkristallschicht aus einer nematischen Flüssigkristallschicht oder einer cholesterischen Flüssigkristallschicht mit einer Ganghöhe größer als die Lücke gebildet ist.

3. Flüssigkristallanzeige nach Anspruch 1 oder 2, die weiter folgendes aufweist: ein Paar von Polarisatoren (4, 5), und zwar angeordnet außerhalb des Paars von Substraten (1, 2), wobei das Paar von Polarisatoren (4, 5) Linearpolarisatoren sind, die Polarisationsachsen besitzen, die sich senkrecht zueinander kreuzen und einen 45°-Winkel bezüglich einer Ebene bilden, die die Kippwinkel enthält oder Zirkularpolarisatoren mit entgegengesetzten bzw. gegenläufigen Zirkularisationsrichtungen sind.

**Revendications**

1. Affichage à cristaux liquides utilisant l'effet de biréfringence contrôlée électriquement et comportant:

une paire de substrats (1, 2) disposés face à face et séparés l'un de l'autre par un espace de largeur prédéterminée et une couche de cristaux liquides (6 à 9) intercalée entre les substrats (1, 2) de ladite paire, les surfaces en regard des substrats (1, 2) de ladite paire étant préalablement soumis à un traitement de surface pour donner aux molécules adjacentes (3) de cristaux liquides des angles d'inclinaison prédéterminés par rapport à une perpendiculaire à la cellule,

caractérisé en ce que l'angle d'inclinaison au niveau de l'une des surfaces est différent en signe et en grandeur de l'angle d'inclinaison au niveau de la surface en regard.

2. Affichage à cristaux liquides selon la revendication 1, dans lequel ladite couche de cristaux liquides est constituée d'une couche de cristaux liquides nématiques ou d'une couche de cristaux liquides cholestériques dont le pas est supérieur à la largeur dudit espace.

3. Affichage à cristaux liquides selon la revendication 1 ou 2, comportant en outre une paire de polariseurs (4, 5) placés à l'extérieur de ladite paire de substrats (1, 2), ladite paire de polariseurs (4, 5) étant constituée de polariseurs linéaires dont les axes de polarisation ne coupent entre eux à angle droit et font un angle de 45° avec un plan contenant les angles d'inclinaison, ou de polariseurs circulaires dont les sens de rotation sont opposés.

# FIG. 1

$$\vec{N_1}\begin{pmatrix}0\\-\sin\varphi_{S1}\\\cos\varphi_{S1}\end{pmatrix}$$

$$\vec{N_1}$$

$$\varphi_{S1} > \varphi_{S2}$$

$$\vec{N}$$

$$\vec{N}_{OFF}\begin{pmatrix}\sin\varphi_{OFF}\cos\theta_{OFF}\\\sin\varphi_{OFF}\sin\theta_{OFF}\\\cos\varphi_{OFF}\end{pmatrix}$$

$$\vec{N}_{ON}\begin{pmatrix}\sin\varphi_{ON}\cos\theta_{ON}\\\sin\varphi_{ON}\sin\theta_{ON}\\\cos\varphi_{ON}\end{pmatrix}$$

$$\varphi_1 > \varphi_{OFF} > \varphi_2$$

$$\varphi_{ON} > \varphi_1 > \varphi_2$$

$$\vec{N_2}\begin{pmatrix}0\\\sin\varphi_{S2}\\\cos\varphi_{S2}\end{pmatrix}$$

$$\vec{N_2}$$

"OFF"     "ON"

# FIG. 2A

# FIG. 2B

# FIG. 3

$$\vec{N_1}\begin{pmatrix} \sin\varphi_S \cos\theta \\ \sin\varphi_S \sin\theta \\ \cos\varphi_S \end{pmatrix}$$

$$\vec{N}\begin{pmatrix} \sin\varphi \cos\theta \\ \sin\varphi \sin\theta \\ \cos\varphi \end{pmatrix}\varphi > \varphi_S$$

$\vec{N} /\!/ \vec{N_1}$

$\vec{N_2} /\!/ \vec{N_1}$

45°

-45°

"OFF"      "ON"

14

11

13          13

12

15